# EUROPEAN PATENT APPLICATION

(11) **EP 0 614 798 A1**
(43) Date of publication of application: **14.09.1994**
(21) Application number: 94103888.7
(22) Date of filing: 14.03.1994
(51) Int. Cl.: B62H 5/00, B62H 3/02

(54) **System for the locking of bicycles**

(30) Priority: 12.03.1993 FI 931128
(71) Applicant: TURVATEC OY, SF-15110 Lahti (FI)
(72) Inventor: Raine, Anttonen, SF-15320 Lahti (FI)
(74) Representative: Zipse + Habersack

(57) **Abstract**

The invention relates to a system for the locking of bicycles, in which system the bicycle is locked to a fixed object by means of a locking chain (2) by placing the frame tube (10) of the bicycle into contact with a holding loop (4) and threading the chain (2) through the holding loop so that the frame tube remains between the holding loop and the chain, whereupon the chain is locked to the bicycle with the lock of the bicycle.

## Description

The present invention relates to a system for the locking of bicycles as defined in the preamble of claim 1.

In previously known technology, the locking of bicycles is generally managed by providing the rear wheel with a fixed lock used to block the rotation of the wheel. In addition, various extra locks are used to secure a bicycle to an existing stand or other fixed structure either by the front wheel, by the rear wheel or directly by the frame of the bicycle. However, a problem with all previously known solutions is that a bicycle locked by its front or rear wheel is still very easy to steal. The wheels can be easily removed, and the frame, which is always the most expensive part, can then be stolen. A detached extra lock used to lock a bicycle by its frame leaves too much play between the frame and the fixed object, which means that the bicycle can be swung and twisted so that it is damaged. Moreover, a detached lock is always an extra part which has to be carried along, often dangling on the rack and battering the mud-guard, thus causing noise and wear.

The object of the present invention is to eliminate the drawbacks mentioned above and to achieve a reliable, cheap and safe locking system which makes it very difficult to steal or break a locked bicycle. The locking system of the invention is characterized by what is presented in the characterization part of the claims.

The advantages of the locking system of the invention are simplicity, reliability and low price. A further advantage is that when a bicycle is locked by its frame to a fixed object by means of its own lock which is always carried along and is often also accepted by insurance companies, it will be very difficult to steal any of the most valuable parts of the bicycle, i.e. the frame or the rear wheel. An additional advantage is that when a bicycle is locked tightly by its frame according to the invention, it cannot be jerked or twisted in the stand. Therefore, the bicycle will emerge from a theft attempt in a better condition than one locked by a wheel or loosely by the frame. If a bicycle is only locked by its front or rear wheel, jerking and twisting will easily damage the wheel rim and the pegs.

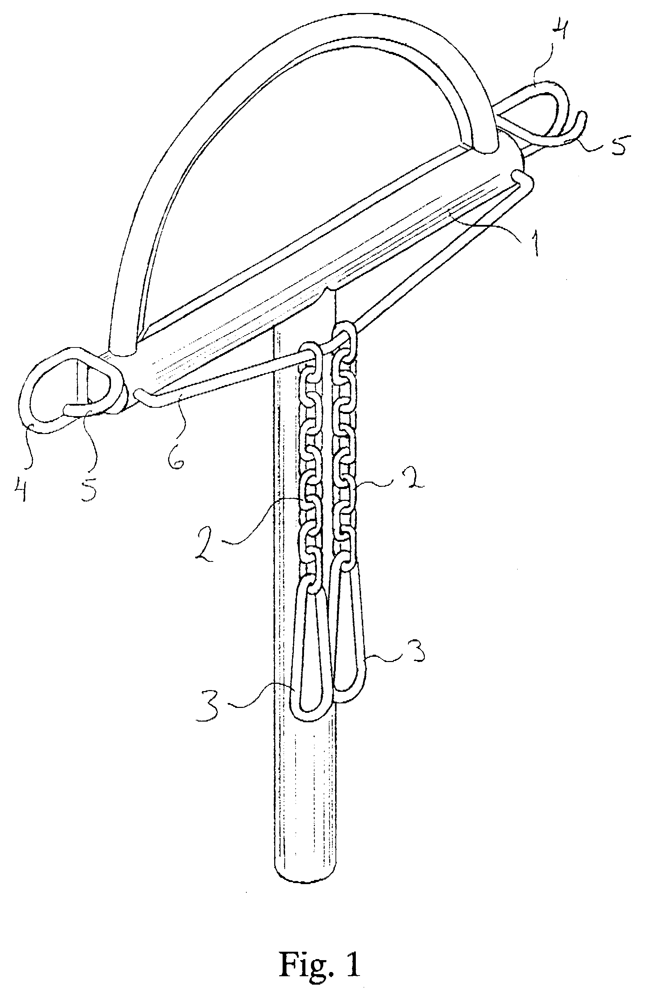

In the following, the invention is described in detail by the aid of examples of its embodiments by referring to the attached drawings, in which
- Fig. 1: presents a bicycle stand used in the locking system as seen in an oblique front view,

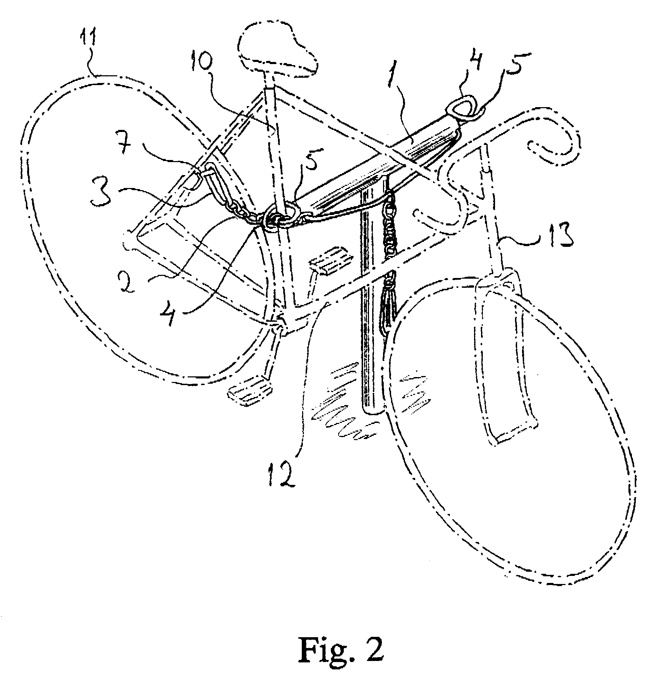

- Fig. 2: presents a bicycle stand according to Fig. 1, with a bicycle locked to the stand.

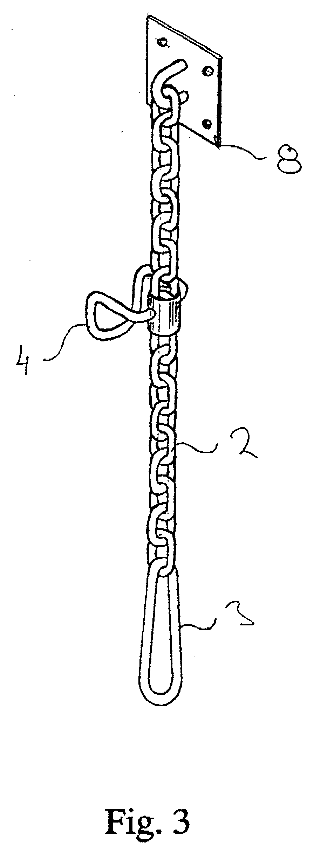

- Fig. 3: presents a wall-mounted locking element used in the locking system,

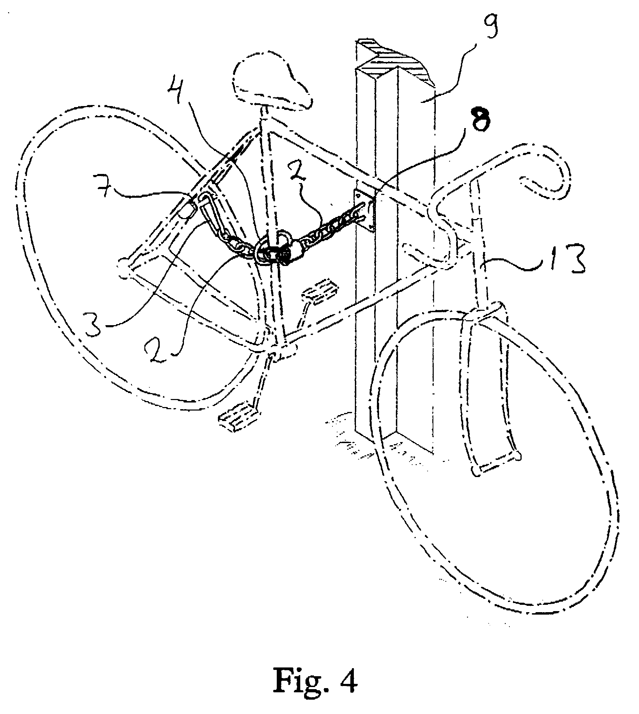

- Fig. 4: presents a wall-mounted locking element according to Fig. 3, with a bicycle locked to the element,

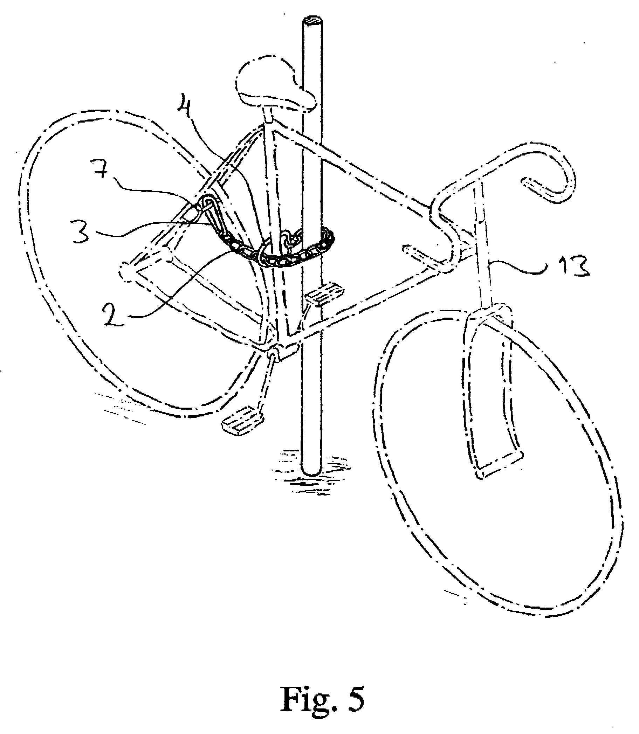

- Fig. 5: presents a system in which a bicycle is locked with a separate chain to an upright post.

The bicycle locking system of the invention consists of an assembly comprising at least a lock 7 mounted on the bicycle itself, a flexible locking element such as a chain 2, a locking link 3 at one end of the chain, a holding loop 4 and a fixed object such as a stand 1 secured in the ground or a mount 8 fixed to a wall. The fixed object may also be any existing upright pole or equivalent when the locking element used is a separate chain.

The stand secured in the ground consists of a vertical tube having a round or rectangular cross-section. Attached to the top of the vertical tube is a horizontal bar with a holding loop 4 at each end of it to hold a bicycle. In top view, the holding loop is a straight closed loop protruding from the end of the horizontal bar in the direction of the bar and lying in a vertical plane. In addition, the holding loop is provided with a retaining part 5 forming an open loop lying in a horizontal plane and having its one end attached to the holding loop, with a gap remaining between the holding loop and the other end of the retainer 5. Through this gap, the frame tube 10 of a bicycle can be placed into contact with the the holding loop and retaining part so that the bicycle will be held firmly in place during the locking operation even on slanting ground. Moreover, the holding loop 4 and retaining part 5 prevent the twisting and jerking of the bicycle. In addition, the horizontal bar is provided with a sliding bar 6 laid in a direction essentially parallel to the horizontal bar. The first end of each locking chain 2 of the stand is mounted on the sliding bar so that it can slide along the bar. The stand may also be provided with additional accessories, e.g. a arched support for posters etc.

When a bicycle 13 is to be locked to a stand secured in the ground, the frame of the bicycle is placed between the holding loop 4 and the retainer. Next, the chain 2 is slid along the sliding bar 6 to a position close to the retainer 5, whereupon the chain is passed between the frame tube 10 and the front tube 12 of the bicycle so that the chain goes around the frame tube 10, leaving the frame tube 10 between the chain and the holding loop 4. After this, the locking link 3 at the end of the chain 2 is threaded through the holding loop 4 and pulled through the holding loop far engough to allow the locking link 3 to reach the fixed lock 7 on the rear wheel 11. The locking pin of the lock is placed into the locking link 3 and the lock is locked. The bicycle is now locked both to the stand 1 and to its own lock.

To allow a bicycle to be locked to a wall, a wall mount 8 attached to a wall or similar fixed object is used, together with a chain 2 attached at one end to the wall mount. Approximately half-way between the ends of the chain there is a holding loop and at the other end of the chain a locking link 3. The holding loop 4 is preferably fixedly attached to the chain so that it cannot be moved along the chain. Thus, the bicycle will be held firmly in place when locked.

When a bicycle is to be locked to a wall mount 8, the end of the chain 2 with the locking link 3 is passed between the frame tube 10 and the front tube of the bicycle 12 and the locking link 3 is threaded through the holding loop on the chain so that the frame tube 10 remains between the holding loop and the chain. Thus enclosed between the chain and the holding loop portions bent to an angle, the frame tube is now surrounded on two sides by the loop portions and by the chain on a third side, i.e. on the open side of the holding loop angle. The chain is then pulled through the holding loop far enough to allow the locking link 3 to reach the fixed lock 7 on the rear wheel 11. The locking pin of the lock is placed into the locking link 3 and the lock is locked. The bicycle is now locked both to the wall mount 8 and to its own lock.

It is obvious to a person skilled in the art that the invention is not restricted to the example described above, but that the embodiments of the invention may vary e.g. within the scope of the claims presented below. For instance, the locking system of the invention can be installed in many ways. Locking stands can be mounted in various groupings, side by side, one behind the other, and so on. Likewise, the design, shape and material of the ground-mounted stand 1 and of the wall mount 8 may be varied according to the situation and need, and the number of stands or mounts can be varied as well. The system also allows the use of a separate chain which is carried along on the bike and differs from currently used separate locks in that the first end of the chain is provided with a holding loop 4 bent to an angle and the other end with a locking link 3. When a bicycle is to be locked by means of a separate chain to an upright post or equivalent, the angular holding loop 4 is placed against the frame tube of the bicycle, the chain end with the locking link 3 is passed between the frame tube 10 and the front tube 12 and the locking link 3 is threaded through the holding loop so that the frame tube 10 remains between the holding loop and the chain. Thus enclosed between the chain and the holding loop portions bent to an angle, the frame tube is now surrounded on two sides by the angular loop and by the chain on a third side, i.e. on the open side of the holding loop angle. The chain is then pulled through the holding loop far enough to allow the locking link 3 to reach the fixed lock 7 on the rear wheel 11. The locking pin of the lock is placed into the locking link 3 and the lock is locked. The bicycle is now locked both to the upright post or equivalent fixed object and and to its own lock. A separate chain provides the advantage that the bicycle can be locked to almost any upright pole or equivalent that is available. However, this involves the difficulty that the chain always has to be carried along. All the chains mentioned above can be replaced with a different flexible locking element, such as a steel cable or other strong cable.

## Claims

1. System for the locking of bicycles, in which the bicycle is locked to a fixed object by means of at least one flexible locking element (2) and a lock carried by the bicycle, **characterized** in that, when the bicycle is to be locked to a fixed object, the frame tube (10) of the bicycle is placed into contact with a holding loop (4) and a chain (2) used as a locking element is threaded through said holding loop so that the frame tube remains between the holding loop and the chain, whereupon the chain is locked to the bicycle by means of the lock carried by the bicycle.

2. System for the locking of bicycles according to claim 1, **characterized** in that the fixed object to which the bicycle is locked is a stand (1) secured in the ground and provided with a holding loop (4) and a retaining part (5) for the frame tube (10) of the bicycle and with a locking chain (2) with a locking link (3) which is locked to the lock (7) of the bicycle.

3. System for the locking of bicycles according to claim 1, **characterized** in that the fixed object to which the bicycle is locked is a mount (8) attached to a wall (9) or equivalent, with a locking chain (2) which is attached by its one end to the mount (8) and has a locking link (3) at its other end, said chain being provided with a holding loop (4) bent to an angle, which holding loop, when the bicycle is to be locked, is placed in contact with the frame tube (10) of the bicycle, the locking link (3) being threaded through the holding loop (4) and locked to the lock (7) of the bicycle.

4. System for the locking of bicycles according to claim 1, **characterized** in that the fixed object to which the bicycle is locked is any suitable upright post, a firm ring or equivalent, around which, when the bicycle is to be locked, is passed a separate locking chain (2) whose first end is provided with a holding loop (4) bent to an angle, the locking operation being performed by bringing the holding loop into contact with the frame tube (10) of the bicycle and passing a locking link (3) attached to the other end of the locking chain (2) through the holding loop so that the frame tube remains between the holding loop and the locking chain, said locking link (3) being then locked to the lock (7) of the bicycle.
